# EUROPEAN PATENT SPECIFICATION

(11) **EP 2 381 626 B1**
(45) Date of publication and mention of the grant of the patent: **03.07.2013**
(21) Application number: 11169745.4
(22) Date of filing: 25.09.2007
(51) Int. Cl.: H04L 12/28

(54) **An access terminal and a method for the terminal binding to the operator**
Zugangsendgerät und Verfahren zum Binden des Endgeräts an den Operator
Terminal d'accès et procédé pour relier le terminal à l'opérateur

(30) Priority: 25.09.2006 CN 200610062833
(43) Date of publication of application: 26.10.2011
(62) Divisional of application: 07816953.9
(73) Proprietor: Huawei Technologies Co., Ltd., Longgang District, Shenzhen Guangdong 518129 (CN)
(72) Inventor: Zhang, Ke, 518129 Shenzhen (CN)
(74) Representative: Kreuz, Georg Maria

(56) References cited:
- GB-A- 2 335 568
- US-A1- 2002 104 016
- US-A1- 2003 041 151
- US-A1- 2005 037 732

## Description

### FIELD OF THE INVENTION

The present invention relates to a technical field of x-Digital Subscriber Line (xDSL), and more particularly, to a technology for binding an access terminal to an operator in an Asymmetric Digital Subscriber Loop (ADSL).

### BACKGROUND OF THE INVENTION

A Point-to-Point Protocol (PPP) provides a whole set of solutions for problems such as link establishment, maintenance, removal, upper layer protocol negotiation, and authentication. The PPP includes link control protocols (LCPs), network control protocols (NCPs), and authentication protocols. The authentication protocols mainly include a Password Authentication Protocol (PAP) and a Challenge-Handshake Authentication Protocol (CHAP).

A typical link establishment process in the PPP is divided into three phases: an establishment phase, an authentication phase, and a network negotiation phase.

The LCP is responsible for establishing a link, and a basic communication mode is selected in this phase. Equipments on two ends of the link transmit configure packets to each other through the LCP. Once a Configure-Ack packet is sent and received, an exchange is completed, and the LCP enters an opened state.

During the authentication phase, a client sends its identity information to a remote access server. In this phase, a secure authentication mode is adopted to prevent a third party from stealing data or masquerading as a remote client to take over the connection with the client. Advancement from the authentication phase to the network-layer protocol phase must not occur until the authentication is completed. If the authentication fails, the authenticator should jump to a link termination phase.

The most commonly used authentication protocols include PAP and CHAP. The PAP is a simple, plain-text authentication scheme. When a network access server (NAS) requires a user to provide a user name and a password, the PAP returns user information in plain text. The CHAP is an encrypted authentication scheme capable of avoiding transmission of the actual password of the user during the establishment of the connection. The NAS sends a challenge including a session ID and an arbitrary challenge string to a remote client. The remote client must use an MD5 one-way hashing algorithm to return the user name and an encryption of the challenge, session ID, and the user's password, and wherein the user name is sent in an unhashed way.

After the authentication phase is finished, the PPP invokes various NCPs that were selected during the link establishment phase. The selected NCPs solve the upper-layer protocol problems on the PPP link. For example, during this phase, the IP control protocol can assign a dynamic address to a dial-in user.

The PPP is one of protocols that are most widely applied in the wide area network (WAN), and is advantageous in being simple, having a user authentication capability, and being capable of handling IP assignment.

Home dial-up access is to establish a communication link between a client and an access server of an operator through the PPP. Due to the rapid progress in the broadband access technology, new applications of the PPP are derived. Typically, in an asymmetric digital subscriber loop (ADSL) access mode, the PPP together with other protocols derives new protocols that satisfy the broadband access requirements, for example, PPP over Ethernet (PPPoE) and PPP over ATM (PPPoA).

PPPoE is a manner of running the PPP over the Ethernet to perform the user authentication access by using the Ethernet resources. The PPPoE not only protects the Ethernet resources of the user side, but also satisfies the xDSL access requirements, and thus becomes the most widely applied technical standard among the xDSL access modes.

In the current communication technology, xDSL has become the mainstream of broadband access for families and small-scale enterprises. A digital subscriber line (DSL) technology is a high-speed transmission technology of transmitting data through a telephone twisted pair, i.e., an unshielded twisted pair (UTP), and includes ADSL, very-high-bit-rate digital subscriber line (VDSL), digital subscriber line (IDSL) based on integrated services digital network (ISDN), and single-pair high-bit-rate digital subscriber line (SHDSL), etc.

Currently, the xDSL access is generally performed by logging into an operator network through PPPoE dial-up. In this case, the access terminal usually operates in two modes: the route mode and the bridge mode.

In the route mode, the PPPoE dial-up is initiated by a modem. The modem extracts a public network IP address and assigns a private network IP address to an equipment, such as a personal computer (PC) in a home network. The modem also provides a route forward service.

In the bridge mode, the PPPoE dial-up is initiated by a PC or a router in a home network. The dial-up initiator extracts an IP address, and the modem only provides a data path without forwarding or performing any other processing on the data.

Here, the modem refers to an access terminal for the xDSL access mode, such as a remote terminal unit (RTU) or home gateway (HGW).

Currently, to attract more xDSL users, most operators reward service subscribers with free access terminals. However, due to the competition between the operators, some operators may adopt a preferential policy of "access with a modem" (i.e., the user may access a network through a self-provided access terminal), so as to draw user resources from other operators. Thereby, a user may receive a free access terminal from one operator, and access the network of another operator by means of "access with a modem", thus resulting in vicious competition between the operators.

The operators, especially those rewarding their subscribers with free access terminals, hope there is a reasonable way to bind the access terminal with the access network, so as to technically restrict the users from using the access terminal to access networks of other operators and thus protect their own benefits. However, so far no solution is provided in this field.

US 2005/0037732 discloses binding a mobile terminal to a network operator.

### SUMMARY OF THE INVENTION

Accordingly, the present invention is directed to an access terminal for binding the access terminal to an operator, so as to solve the problem of being incapable of binding an access terminal to an operator that provides the access terminal.

In order to achieve the above objective, the present invention suggest an access terminal according to claim 1. Advantageous features are defined in the dependent claims.

To overcome the deficiencies in the prior art, according to the present invention, the operator sets an ID in an access terminal modem. When a user accesses an operator network through PPPoE dial-up, the access terminal modem extracts a particular field from a packet and compares the particular field with the preset ID, so as to determine whether the network accessed by the access terminal belongs to the operator or not. If not, the dial-up connection process is ended. In this way, the binding of the access terminal to the operator is achieved. The technical solutions of the present invention can effectively prevent the user from using an access terminal provided by the current operator to access networks of other operators, so as to avoid vicious competition between the operators. Moreover, the present invention is simply achieved affecting the networking mode and the user's habit.

### BRIEF DESCRIPTION OF THE DRAWINGS

The present invention will become more fully understood from the detailed description given herein below for illustration only, and thus are not limitative to the present invention.

FIG. 1 is a flow chart of a route mode according to Embodiment I of the present invention;

FIG. 2 is a flow chart of a bridge mode according to Embodiment 1 of the present invention;

FIG. 3 is a flow chart of a route mode according to Embodiment 2 of the present invention;

FIG. 4 is a flow chart of a bridge mode according to Embodiment 2 of the present invention;

FIG. 5 is a schematic structural view of an access terminal according to an embodiment of the present invention.

### DETAILED DESCRIPTION OF THE EMBODIMENTS

The present invention provides an access terminal and a method for binding the access terminal to an operator.

In the present invention, the operator sets an identifier (ID) in an access terminal modem. When a user accesses a network of the operator through PPPoE dial-up, the access terminal modem extracts a particular field from a packet and compares the particular field with the preset ID, so as to determine whether the network accessed by the access terminal belongs to the operator or not. If not, a dial-up connection process is ended. In this way, the binding of the access terminal to the operator is achieved.

The route and bridge modes are respectively illustrated in embodiments below.

***Embodiment 1*:** An operator domain name serves as an ID for identification.

First of all, an operator pre-stores a domain name into an access terminal by fixedly writing the domain name in a code or writing the domain name in a flash in a certain manner, and ordinary users cannot modify the stored domain name.

In a point-to-point protocol over Ethernet (PPPoE) dial-up process, a modem extracts a domain name field from a user name and compares the extracted domain name field with the pre-stored operator domain name. Only if the two are identical, a dial-up is made.

In the route mode, the dial-up process is initiated by a modem. The modem may be configured with a user name, for example, "username@xxx.xx". The modem needs to obtain the user name from its configuration for dial-up. A certain rule can be set up in a program for extracting a domain name after the character "@" from the user name. The modem directly determines whether the extracted domain name is identical to the domain name preset by the operator or not during the PPPoE dial-up process.

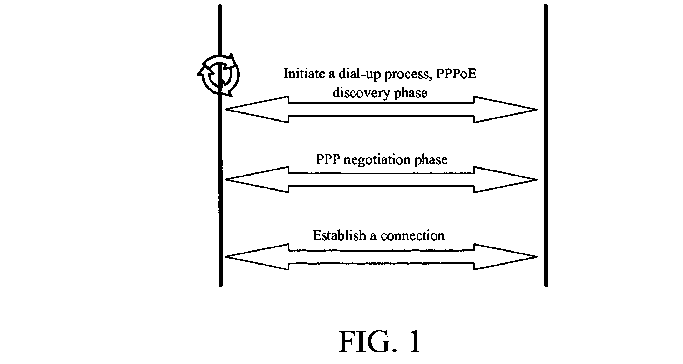

FIG. 1 is a flow chart of the route mode. Referring to FIG. 1, it is assumed that the access terminal modem is rewarded by the operator to the user, a domain name registered by the operator is "@163.gd", and the domain name "@163.gd" is pre-stored in the modem. When the user accesses a network through the modem, if an accessed operator domain name is "@163.gd", the modem initiates a dial-up process, and a user name in a packet is "username@163.gd". At this time, the modem extracts the domain name "@163.gd" and compares the extracted domain name "@163.gd" with the preset domain name (@163.gd). If the two are identical, the dial-up process proceeds. If the accessed operator domain name is not "@163.gd", the dial-up is prohibited.

In the bridge mode, the PPPoE dial-up process is initiated by a personal computer (PC). The domain name identification requires for a modem capable of processing a PPPoE packet of the PC or a router, but no existing bridge modem has the capability. Therefore, a PPP detection point needs to be added in the bridge processing flow. Firstly, it is determined whether the packet is a PPP session packet or not (the Ethernet type is 0x8864), and if the packet is a PPP session packet, the PPP packet is parsed to extract a user name from a link control protocol (LCP) authentication (PAP or CHAP) packet thereof. Then, it is determined whether the domain name in the user name is identical to a preset value or not, and if the domain name in the user name is not identical a preset value, the PPPoE dial-up is ended. The PPPoE dial-up may be ended in many ways, and the simplest way is to directly discard the PPP authentication packet.

It is assumed that the access terminal modem is rewarded to the user by an operator with a domain name of "@163.gd", and the operator domain name "@163.gd" is pre-stored in the modem.

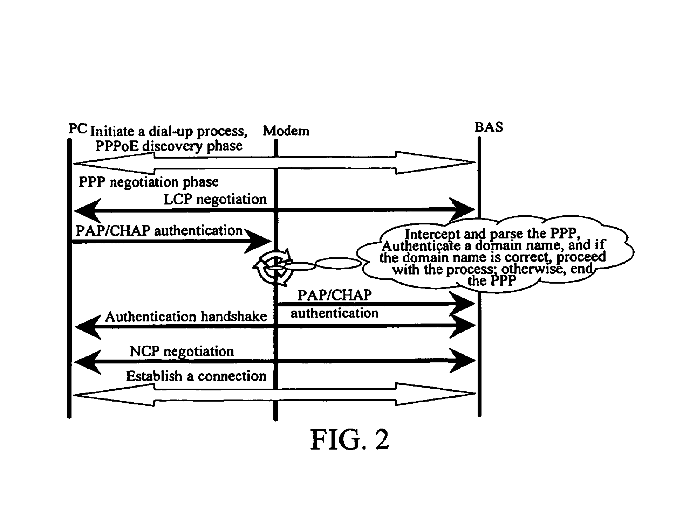

FIG. 2 is a flow chart of the bridge mode. Referring to FIG. 2, the flow includes the following steps.

1. A PC initiates a PPPoE dial-up process, and enters a PPPoE discovery phase together with a broadband access server (BAS).

2. The PC performs an LCP negotiation with the BAS.

3. The PC sends an LCP/CHAP authentication packet carrying a user name to the BAS.

4. A modem determines that the packet is a PPP packet and parses the packet to extract a domain name after the character "@" from the user name and compare the extracted domain name with a preset value "@163.gd" character by character. If the two are different, the network accessed by the user does not belong to the operator with a domain name of @163.gd, and the PPP packet is discarded; otherwise, Step 5 is performed.

5. The PC performs an authentication handshake with the BAS.

6. After the PC performs an NCP negotiation with the BAS, a link is established.

***Embodiment 2:*** During the service distribution, the operator adds its trademark or other representative character strings into a user name applied by a user, and pre-stores such a feature character into an access terminal as an ID. When the user accesses a network through the access terminal, the access terminal extracts a feature character from a user name and compares the extracted feature character with the stored feature character. If the two are identical, the dial-up process proceeds.

First of all, the operator pre-stores the feature character into the access terminal by fixedly writing the character in a code or writing the character in a flash in a certain manner, and ordinary users cannot modify the stored feature character.

During the service distribution, the operator adds the feature character into a user name applied by a user, for example, to obtain "username_XXX", in which "XXX" is the feature character of the operator.

In a PPPoE dial-up process, a modem extracts a feature character from a user name and compares the extracted character with the pre-stored feature character. Only if the two are identical, a dial-up is made.

In the route mode, the dial-up process is initiated by a modem. The modem may be configured with a user name, for example, "username_XXX @xxx.xx". The modem needs to obtain the user name from its configuration for dial-up. A certain rule can be set up in a program for extracting a character string before the character "@" and after "username". The modem directly determines whether the extracted character string is identical to the feature character preset by the operator or not during the PPPoE dial-up process.

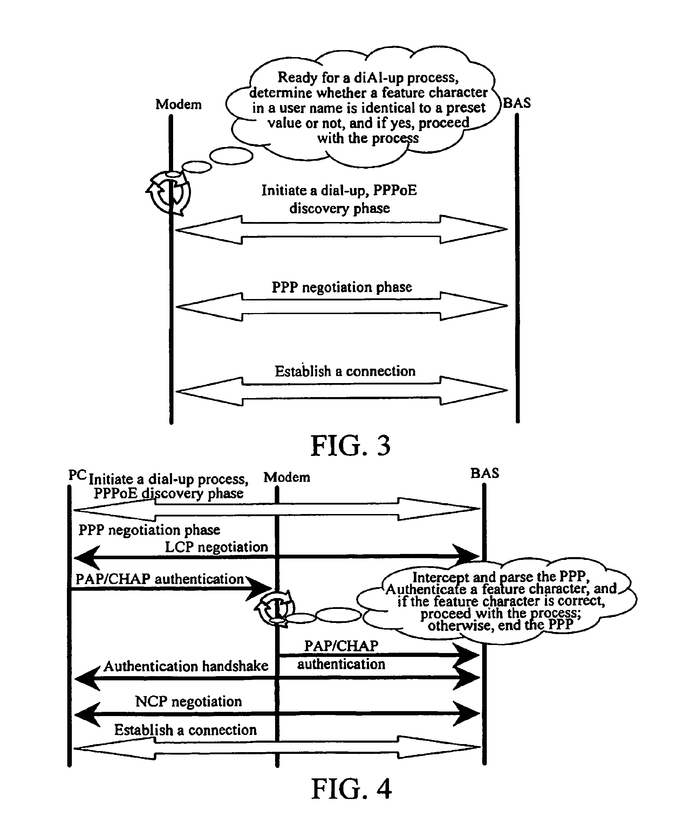

FIG. 3 is a flow chart of the route mode. Referring to FIG. 1, it is assumed that the access terminal modem is rewarded by the operator to the user, and the operator pre-stores a feature character "XXX" into the modem. When the modem initiates a dial-up process, a user name in a packet thereof is "username_XXX @xxx.xx". At this time, the modem extracts a feature character "XXX " from the user name and compares the extracted feature character with the preset feature character "XXX". If the two are identical, the dial-up process proceeds.

In the bridge mode, the PPPoE dial-up process is initiated by a PC. The feature character identification requires for a modem capable of processing a PPPoE packet of the PC or a router, but no existing bridge modem has the capability. Therefore, a PPP detection point needs to be added in the bridge processing flow. Firstly, it is determined whether the packet is a PPP session packet or not, and if the packet is a PPP session packet, the PPP packet is parsed to extract a user name from an LCP authentication (PAP or CHAP) packet thereof. Then, it is determined whether the feature character in the user name is identical to a preset value or not, and if the feature character in the user name is not identical to a preset value, the PPPoE dial-up is ended. The PPPoE dial-up may be ended in many ways, and the simplest way is to directly discard the PPP authentication packet.

FIG. 4 is a flow chart of the bridge mode. Referring to FIG. 2, the flow includes the following steps.

1. A PC initiates a PPPoE dial-up process, and enters a PPPoE discovery phase together with a BAS.

2. The PC performs an LCP negotiation with the BAS.

3. The PC sends an LCP/CHAP authentication packet to the BAS.

4. A modem determines that the packet is a PPP packet and parses the packet to extract a character string before the character "@" and after "username" from a user name of the packet and compare the extracted character string with a preset value "XXX" character by character. If the two are different, the PPP packet is discarded; if the two are identical, Step 5 is performed.

5. The PC performs an authentication handshake with the BAS.

6. After the PC performs an NCP negotiation with the BAS, a link is established.

In addition to using the domain name or feature character of the operator separately as an ID, the two can also be combined together. For example, during the service distribution, the operator adds the feature character into the user name applied by the user. When a dial-up is made, the modem extracts a feature character and a domain name from a user name and compares the extracted feature character and domain name with the preset value, so as to determine whether the dial-up process proceeds or not.

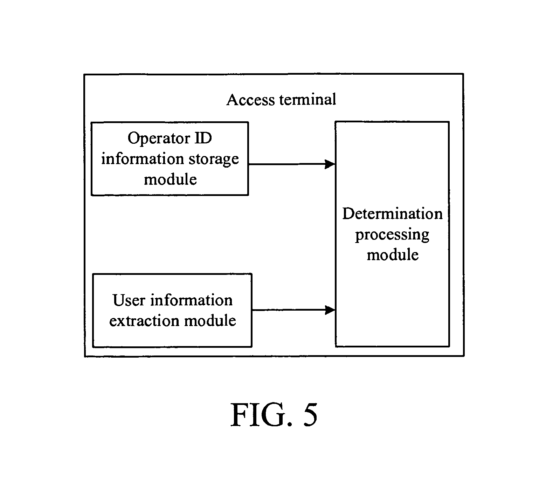

FIG. 5 shows a structure of an access terminal according to an embodiment of the present invention. Referring to FIG. 5, the access terminal includes an operator ID information storage module, a user information extraction module, and a determination processing module.

The operator ID information storage module is adapted to store an ID of an operator that provides the access terminal.

The user information extraction module is adapted to extract an ID from user information.

The determination processing module is adapted to determine whether the ID extracted by the user information extraction module is identical to the operator ID stored in the access terminal or not, and if not, end a dial-up process to the BAS; otherwise, proceed with the dial-up process.

It will be apparent to those skilled in the art that various modifications and variations can be made to the present invention without departing from the scope of the invention. In view of the foregoing, it is intended that the present invention cover modifications and variations of this invention provided that they fall within the scope of the following claims.

## Claims

1. An access terminal for binding an access terminal to an operator, **characterised by** comprising:
a user information extraction module, adapted to extract an operator domain name and/or a feature character of the operator from a packet received from a user side; and
a determination processing module, adapted to determine whether the extracted operator domain name and/or feature character of the operator extracted by the user information extraction module is identical to an operator domain name and/or a feature character of the operator stored in the access terminal or not, if not, end a dial-up process to a broadband access server (BAS), and if yes, proceed with the dial up process;
wherein the access terminal further comprises:
means for determining whether the packet received from the user side is a PPP session packet;
wherein said user information extraction module is adapted to, if the packet received from the user side is a PPP session packet, parse the PPP packet to extract the operator domain name and/or feature character of the operator from the PPP session packet received from the user side.

2. The access terminal according to claim 1, **characterised by** further comprising:
an operator ID information storage module, adapted to store the operator domain name and/or the feature character of the operator.

3. The access terminal according to claim 1 or 2, **characterised in that** the access terminal is a remote terminal unit (RTU) or home gateway (HGW).

## Patentansprüche

1. Zugangsendgerät zum Binden eines Zugangsendgeräts an einen Betreiber, **dadurch gekennzeichnet, dass** es Folgendes umfasst:
ein Benutzerinformations-Extraktionsmodul, das dafür ausgelegt ist, einen Betreiberdomänennamen und/oder ein Merkmalzeichen des Betreibers aus einem von einer Benutzerseite empfangenen Paket zu extrahieren; und
ein Bestimmungsverarbeitungsmodul, das dafür ausgelegt ist, zu bestimmen ob der extrahierte Betreiberdomänenname und/oder das extrahierte Merkmalzeichen des Betreibers, die durch das Benutzerinformations-Extraktionsmodul extrahiert werden, mit einem Betreiberdomänennamen und/oder einem Merkmalzeichen des Betreibes, die in dem Zugangsendgerät gespeichert sind, identisch sind oder nicht, und wenn nicht, einen Einwählprozess in einen Breitbandzugangsserver (BAS) zu beenden, und wenn ja, mit dem Einwählprozess fortzufahren;
wobei das Zugangsendgerät ferner Folgendes umfasst:
ein Mittel zum Bestimmen, ob das von der Benutzerseite empfangene Paket ein PPP-Sitzungspaket ist;
wobei das Benutzerinformations-Extraktionsmodul dafür ausgelegt ist, falls das von der Benutzerseite empfangene Paket ein PPP-Sitzungspaket ist, das PPP-Paket zu parsen, um den Betreiberdomänennamen und/oder das Merkmalzeichen des Betreibers aus dem von der Benutzerseite empfangenen PPP-Sitzungspaket zu extrahieren.

2. Zugangsendgerät nach Anspruch 1, **dadurch gekennzeichnet, dass** es ferner Folgendes umfasst:
ein Betreiber-ID-Informationsspeichermodul, das dafür ausgelegt ist, den Betreiberdomänennamen und/oder das Merkmalzeichen des Betreibers zu speichern.

3. Zugangsendgerät nach Anspruch 1 oder 2, **dadurch gekennzeichnet, dass** das Zugangsendgerät eine Remote Terminal Unit (RTU) oder ein Home Gateway (HGW) ist.

## Revendications

1. Terminal d'accès permettant le rattachement d'un terminal d'accès à un opérateur, **caractérisé en ce qu'**il comprend :
un module d'extraction d'informations utilisateur, conçu pour extraire d'un paquet reçu d'un côté utilisateur un nom de domaine d'opérateur et/ou un caractère caractéristique de l'opérateur ; et
un module de traitement de détermination, conçu pour déterminer si le nom de domaine d'opérateur et/ou le caractère caractéristique de l'opérateur extraits par le module d'extraction d'informations utilisateur sont identiques à un nom de domaine d'opérateur et/ou un caractère caractéristique de l'opérateur enregistrés dans le terminal d'accès et, si non, pour mettre fin à un processus d'accès par ligne commutée à un serveur d'accès à large bande (BAS) et, si oui, pour poursuivre le processus d'accès par ligne commutée ;
lequel terminal d'accès comprend en outre :
un moyen pour déterminer si le paquet reçu du côté utilisateur est un paquet de session PPP ;
lequel module d'extraction d'informations utilisateur est conçu, si le paquet reçu du côté utilisateur est un paquet de session PPP, pour analyser la syntaxe du paquet PPP de sorte à extraire du paquet de session PPP reçu du côté utilisateur le nom de domaine d'opérateur et/ou le caractère caractéristique de l'opérateur.

2. Terminal d'accès selon la revendication 1, **caractérisé en ce qu'**il comprend en outre :
un module d'enregistrement d'informations d'identifiant d'opérateur, conçu pour enregistrer le nom de domaine d'opérateur et/ou le caractère caractéristique de l'opérateur.

3. Terminal d'accès selon la revendication 1 ou 2, **caractérisé en ce qu'**il prend la forme d'une unité terminale distante (RTU) ou d'une passerelle domestique (HGW).
